# EUROPEAN PATENT SPECIFICATION

(11) **EP 3 137 750 B1**
(45) Date of publication and mention of the grant of the patent: **24.07.2024**
(21) Application number: 15721307.5
(22) Date of filing: 01.05.2015
(51) Int. Cl.: F02B 29/02, F01L 1/28

(54) **INTERNAL COMBUSTION ENGINE**
VERBRENNUNGSMOTOR
MOTEUR À COMBUSTION INTERNE

(30) Priority: 02.05.2014 GB 201407763; 23.05.2014 GB 201409198
(43) Date of publication of application: 08.03.2017
(73) Proprietor: Cage Technologies Limited, Lancaster LA2 0DZ (GB)
(72) Inventor: ANDREWS, Paul Francis, Cockerham Lancaster Lancashire LA2 0DZ (GB)
(74) Representative: Hutchinson, Thomas Owen
(86) International application number: PCT/GB2015/051278
(87) International publication number: WO 2015/166264

(56) References cited:
- AT-B- 192 681
- AT-B- 390 998
- DE-A1- 3 517 177
- FR-A1- 2 772 424
- GB-A- 191 118 520
- GB-A- 364 945
- GB-A- 453 287
- GB-A- 469 777
- US-A- 2 191 745
- US-A- 5 020 486

## Description

This invention relates to an internal combustion engine and to a method of operating an internal combustion engine.

An internal combustion engine typically comprises a piston housed within a cylinder, which cylinder comprises an inlet duct for introducing a fuel and air mixture and an exhaust duct for the release of exhaust gases. In a 4-stroke internal combustion engine air and fuel is drawn in through the inlet duct by a downward movement of the piston, the fuel air mixture is then compressed by an upward movement of the piston, the compressed mixture is then combusted causing a downward, power stroke, of the piston, an upward movement of the piston then forces exhaust gases to leave via the exhaust duct, the inlet duct having been closed. US 8056541 describes an internal combustion engine with a recess in the combustion chamber and a single poppet valve for each cylinder. FR 2859764 describes a fuel injection system for a multi-valve diesel engine. AT 390998 describes an internal combustion engine with a depression in a combustion chamber, and concentric valves GB 2203192 describes an internal combustion engine with a combination of valves in the inlet and exhaust ducts.

Other known engines are described in the following published patent specifications: US2191745 [Barkeij, 27 Feb 1040], GB191118520 [Kloos, 2 May 1912], AT192681 [Buechi, 25 Oct 1957], AT390998 [Fuerbass, 25 Jul 1990], US5020486 [Unger, 4 Jun 1991], FR2772424 [Piot, 18 Jun 1999], DE3517177 [Nowack, 14 Nov 1985], GB364945 [Eberman, 14 Jan 1932], and GB469777 [Barton, 3 Aug 1937]

Problems arise with previous designs of internal combustion engines because it is often difficult to ensure that the cylinder is completely filled with air-fuel mixture on an induction stroke and that it is completely scavenged of exhaust gasses on an exhaust stroke. This incomplete filling and emptying of the cylinder reduces the engine's power output and fuel efficiency.

It is an object of the present invention to address the above-mentioned disadvantages.

The invention is as set forth in the appended independent claim. Optional or preferred features of the invention are set forth in the appended dependent claims.

In a first preferred embodiment of the invention, the exhaust duct is tuned to accelerate the inlet fluid when the piston is near the top of its stroke, and to create negative pressure in the cylinder to aid cylinder filling with inlet fluid, through at least part of the induction stroke, by harnessing energy in the flow of exhaust fluid.

Further preferably, the exhaust duct is tuned to harness energy and pressure waves in the exhaust flow to affect the dynamics and/or flow of inlet fluid to aid scavenging of the cylinder using reflected negative pressure waves from the exhaust flow.

In a still further embodiment the exhaust duct is tuned to harness energy and pressure waves in the exhaust flow to affect the dynamics and/or flow of inlet fluid to assist cylinder filling using reflected positive pressure waves. In some cases, the positive pressure waves can force fluid drawn from the inlet duct into the exhaust duct back into the cylinder.

In a further preferred embodiment of the invention the exhaust duct is tuned by adjusting the length and/or shape and/or diameter of the exhaust duct.

In a preferred embodiment of the invention said engine further comprises a wall separating the inlet and exhaust ducts, said wall guiding fluid into the cylinder in a first direction and guiding fluid out of the cylinder in a second direction, where said first and second directions are different directions.

Preferably, the combustion chamber is shaped to allow the chamber valve to be significantly open when the piston is at top dead centre placing substantially all of the remaining cylinder and combustion chamber space above the lower surface of the valve head. Further preferably, said wall is a substantially vertical wall separating the inlet and exhaust ducts, located immediately above the chamber valve seat. In some embodiments of the invention, the wall is situated either centrally or to either side of the chamber valve vertical axis. The chamber valve may be located between the inlet and exhaust ducts and the main chamber of the cylinder. The chamber valve may have width, which may be a diameter, which is greater than 20% of the cylinder width. The chamber valve preferably has a width of between 25% and 75% of the cylinder width, most preferably between 40% and 60% of the cylinder width.

Further preferably, one or both of the inlet duct and an exhaust duct enter the cylinder at an angle to a longitudinal axis of a side wall of the cylinder, or tangentially to the side wall of the cylinder. In a still further embodiment the inlet duct and/or the exhaust duct enter the cylinder at an inclination to the longitudinal axis of the cylinder, preferably at an inclination of between 35 and 90 degrees to the horizontal plane.

Depending on the iteration of the invention the wall may be positioned so that it creates equal sized orifices for both inlet and exhaust ducts or greater and lesser sized orifices for either the inlet or exhaust ducts. When the chamber valve is closed it may partially block the passage of gas between the inlet and exhaust ducts by creating a seal or partial seal with the wall. When the chamber valve is open inlet gas may be drawn into the exhaust duct by negative pressure or suction caused by the flow of exhaust gas.

Preferably, each cylinder has a single chamber valve, and the inlet and exhaust ducts may enter the cylinder through a chamber connecting the inlet and exhaust ducts situated above the chamber valve seat.

Preferably the inlet duct valve may be a reed valve, and the chamber valve is a poppet valve.

The exhaust duct may be connected to an exhaust pipe and/or an exhaust silencing system. The exhaust duct, pipe or silencer may be internally sized and shaped to control the flow speeds and pressures of the exhaust gas.

The chamber valve may have a valve seat which forms a boundary between the inlet and exhaust ducts and the main chamber.

Where the inlet and/or exhaust ducts enter at an inclination to the longitudinal axis of the cylinder, the ducts may be arranged at opposite sides of the engine. The alignment of the inlet duct may cause fluid entering the cylinder over the chamber valve head to form a shape similar to a toroid, a barrel, or one or more horizontally aligned cylinders of moving gas and fuel mixture within the cylinder. According to another iteration of the invention a combustion chamber is formed between a recess in the cylinder head and a flat or slightly recessed piston top surface. Looking from the piston top the recess in the cylinder head may be approximately oval or oblong in shape. The length of the oval or oblong profile may be the same or slightly less than the diameter of the cylinder bore. The width of the oval or oblong may be the same or slightly greater than the diameter of the head of the chamber valve. The longer walls of the chamber may be vertical, and the narrower walls may incline upwards at an angle to meet the chamber valve seat. This shape allows for a squish area between the top of the piston and the cylinder head adjacent to the narrow sides of the combustion chamber.

In a further embodiment of the invention a combustion chamber is formed between a recess in the cylinder head and a flat or slightly recessed piston top surface. Preferably, the combustion chamber is a compact circular part conical combustion chamber in the cylinder head with a ring-shaped squish area. Alternatively, the combustion chamber has an oblong or oval shaped combustion chamber with two D or crescent shaped squish areas on opposite sides of the chamber. In another alternative, the combustion chamber is substantially a cylindrical depression in the piston with a ring-shaped squish area that may have an inclination of between zero and thirty degrees.

The depression in the piston may be steep-sided, preferably with approximately vertical sides. The depression preferably extends substantially in the direction of the longitudinal axis of the piston.

The depression may be substantially cylindrical. It may contain at least one outwardly extending smaller recess. The or each recess may be located to allow a spark plug of the engine to project into the main chamber. The or each recess may be asymmetrical. The recess may be in the shape of a lobe that may, in use, cause an eddy to form in fluid flowing around the depression. Said eddy may be formed close to the spark plug.

Looking from the piston top the combustion chamber shape may be circular of a greater diameter than the chamber valve and of an equal or lesser diameter than the cylinder. Looking from a side view, the walls of the combustion chamber may slope or curve from the greater diameter to the lesser diameter of the valve seat. When a combustion chamber is formed with a lesser diameter than the cylinder a ring-shaped squish area may be formed between the piston top and this smaller diameter of the combustion chamber recess. These three combustion chamber iterations all allow the chamber valve to be largely or fully open when the piston is at top dead centre and allow the use of a large diameter chamber valve and a compact combustion chamber and a high compression ratio.

The invention extends to an internal combustion engine having an inlet duct, exhaust duct, separating wall, orifices, valves, exhaust arrangement and combustion chambers as described above.

According to another aspect of the present invention a method of aspirating an internal combustion engine comprises directing fluid into a cylinder of the engine substantially at an offset to a longitudinal axis of a side wall of the cylinder.

Preferably, the fluid is directed at approximately a tangent to the side wall of the cylinder, causing the fluid to swirl in a motion around the axis of the cylinder.

The inlet and exhaust ducts may be substantially adjacent to each other in the cylinder head.

The fluid may be directed into the cylinder at an inclination to the longitudinal axis of the cylinder, preferably at an inclination of approximately 5 to 45 degrees from the longitudinal axis.

The fluid may enter a subsidiary chamber of the cylinder from the inlet duct. A channel in the subsidiary chamber may guide the fluid.

The channel may direct fluid from the subsidiary chamber to a main chamber of the cylinder. The channel may direct fluid into the main chamber through a gap between a valve of the engine and a valve seat thereof. Preferably, the chamber valve is located between the subsidiary chamber and the main chamber of the cylinder. In some cases, the chamber valve has a valve seat which forms a boundary between the subsidiary chamber and the main chamber.

Fluid leaving a main chamber of the cylinder may be guided by a channel in the subsidiary chamber, to the exhaust duct.

The method may include fuel being injected onto the valve, to thereby atomise the fuel and/or cool the valve.

The depression in the end of the piston may include a smaller recess that may take the form of a lobe-shaped outward extension, which may accommodate a spark plug which projects into the cylinder. The outward extension may cause an eddy of fluid to be formed close to the spark plug.

Specific embodiments of the present invention will now be described by way of example with reference to the accompany drawings, in which:
Figure 1 is a schematic partially cut away view from above of a single valve internal combustion engine;
Figure 2 is a schematic partial cross section view of the engine in Figure 1;
Figure 3 is a schematic cross-sectional view of the engine showing the squish effect caused by the close proximity of the angled rim of the piston to the angled top of the cylinder at the end of the compression stroke;
Figure 4 is a schematic partial cross-section of the engine showing an arrangement and possible gas flow at the point of ignition;
Figure 5 is a schematic partial cross-section of the engine showing gas flow effect with the piston at Top Dead Centre prior to the induction stroke;
Figure 6 is a schematic cross-sectional partial side view of the engine, showing possible gas flow within the engine during the induction stroke;
Figure 7 is a schematic cross sectional partial top view of an alternative embodiment of the engine during a combustion step;
Figure 8 is a schematic cross-sectional partial side view of an embodiment of the engine and exhaust showing pressure wave reflection in the exhaust prior to the end of the induction stroke;
Figure 9 is a partial schematic cross-sectional side view of an alternative embodiment of the engine;
Figure 10 is a schematic partially cut away top view of the engine of Figure 9;
Figure 11 is a schematic side view of an alternative embodiment with a flat-topped piston and a circular combustion chamber above the piston;
Figure 12 is a schematic cross-section view of the engine looking along the direction of arrow C in figure 11, showing a ring-shaped squish area at the edge of the combustion chamber;
Figure 13 is a schematic side view of an alternative embodiment with an oblong/oval combustion chamber above the piston;
Figure 14 is a schematic cross-section view of the engine (looking along the direction of arrow D in figure 13 showing a 'D' shaped squish area on 2 sides of the combustion chamber;
Figure 15 is a schematic end view corresponding to figure 14

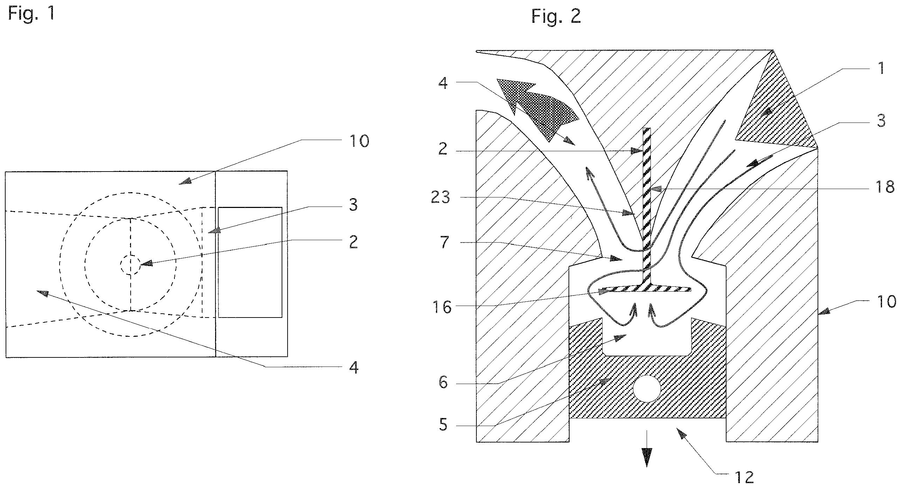

Figure 2 shows an internal combustion engine 10 having a single chamber valve 2 per cylinder 12, with an inlet duct 3 and an exhaust duct 4, both of which lead from an exterior face of the engine 10 to a chamber 7 above a main chamber of the cylinder 12. In the preferred embodiment of the invention inlet duct 3 and exhaust duct 4 may positioned on opposite sides of the cylinder and are separated by a substantially vertical wall 23 terminating close to the top of cylinder 12, thereby reducing chamber 7 to a minimal gap when the chamber valve 2 is closed. Whilst wall 23 is provided in the preferred embodiment of the invention, it is not essential, and the engine may still operate without the wall separating the inlet and exhaust ducts. Valve 2 is located at a top end of the cylinder 12 and is arranged to open and close an opening in the top end of the cylinder 12. Preferably the chamber valve 2 is a poppet valve (and is a poppet valve in all of the illustrated embodiments) with a stem 18, and a valve head 16, but other types of valves may also be used. A piston 5 is located within the cylinder 12 and is arranged to move in the usual way. A combustion chamber 6 is located in an upper end of the piston 5 or in a space between the top of piston 5 and the lower surface of poppet valve head 16.

In more detail, the inlet duct 3 extends downwards at an angle of approximately 60 degrees from an upper end of the engine 10 to the chamber 7 however this angle may vary between 30-90 degrees. The inlet duct 3 joins the chamber 7. A short distance up stream of the chamber 7, the inlet duct 3 widens and a reed valve 1 is positioned to prevent the passage of exhaust fluid back up the inlet duct 3. Typically, the reed valve 1 is a pressure sensitive one-way flow device.

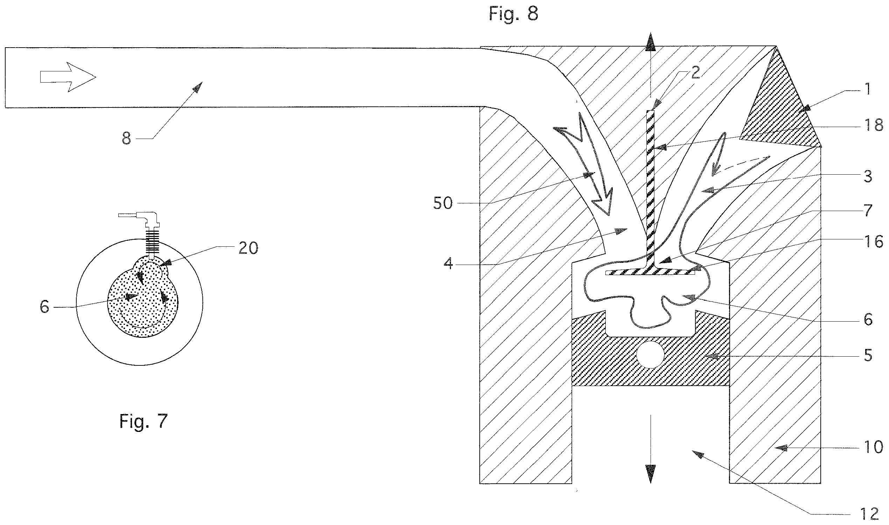

The exhaust duct 4 extends from the chamber 7 and follows a path which is approximately a mirror image of the inlet duct 3 - (see Figure 2), although the exhaust duct may follow an alternative (non-mirrored) pathway. The exhaust duct 4 is of relatively large diameter and has smooth sides to promote the rapid departure of exhaust gas to an exhaust tube 8 (as shown in figure 8). Preferably the exhaust duct 4 is a valve less system and does not include any other physical flow restrictions. Of course, the exhaust duct 4 may connect to a standard exhaust system 8 for use with a 2 or 4 stroke engine which may be provided with physical restrictions or valves to restrict flow in the subsequent exhaust system.

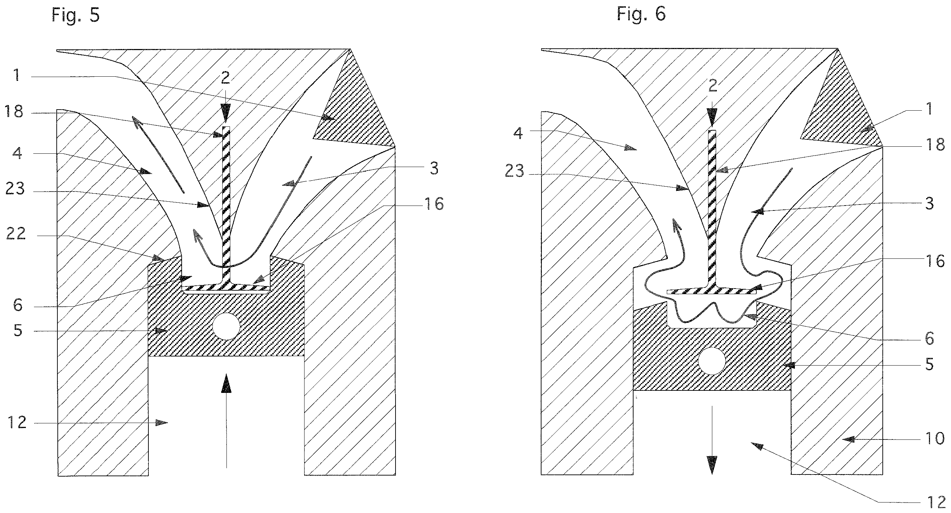

The poppet valve 2 effectively forms a "lid" on the combustion chamber 6. The poppet valve has a head portion 16 in the form of a disc which is arranged for movement to optionally seal the chamber 7 from the cylinder 12, by movement of a stem portion 18. The poppet valve head 16 may have a diameter or width which is approximately 50% of the diameter of the piston. As shown (in figure 5) the head 16 of poppet valve 2 is shaped to fit snugly in the base of the combustion chamber 6 in the iteration of the engine that uses a bowl in piston combustion chamber.

To enable the desired flow of gas/fluid out of and into the engine with minimal restriction, the combustion chamber 6 is configured to allow the poppet valve 2 to be substantially open when the piston 5 is at the top of its stroke (top dead centre-TDC) and combustion chamber 6 may be formed as a bowl in the piston crown or as a recess in the cylinder head below the poppet valve 2 and above the piston crown. The combustion chambers 6 shown in figures 2 to 15 enable free entry and exit of fluid into the cylinder, combined with a compact chamber shape thus allowing good compression due to use of shapes and volumes that allow a high compression ratio. This enables good combustion of the inlet air/fuel mixture. Combustion will be further aided by the significant squish areas 22 illustrated in later figures.

When the combustion chamber is in the top of the piston 5, it is generally circular in cross-section, but it may also incorporate a recess 20 which may be in the shape of a lobe and is shaped to allow a spark plug to intrude into chamber 6 (see figure 7). As shown, this combustion chamber 6 is substantially cylindrical, with a substantially flat base, although the base may be provided with small protrusions. The head 16 of poppet valve 2 also has a flat base, and when the valve is on the bottom of the combustion chamber 6 as shown in figure 5, the valve head 16 sits snugly on the top of the base of combustion chamber 6 (see figure 5). In this embodiment of the invention, the valve head 16 and base of the combustion chamber 6 are both flat, but other shapes may be considered. For example, the combustion chamber 6 may be hemi-spherical shaped, with concave sides rather than vertical sides. It may have a dished floor, in which cases the valve head 16 could be similarly shaped. Although a preferred embodiment of the invention has a cylindrical combustion chamber 6, with flat valve head 16, the precise shape of the combustion chamber 6 and valve head 16 is less important than the fact that the two are shaped so that the valve head 16 will fit snugly against the interior of the combustion chamber 6 and in particular prevent pockets of fluid being trapped between the bottom surface of the valve head and the combustion chamber floor.

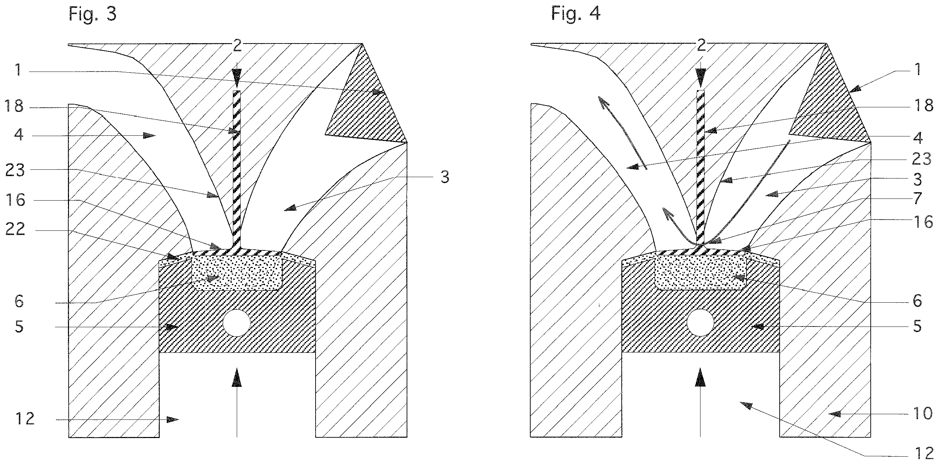

When incorporated, the recess 20 also serves the purpose of allowing the tip of a spark plug 9 to have the necessary clearance from the piston 5 where it projects into the combustion chamber 6. Two or more spark plugs 9 may be used around the circumference of the combustion chamber, each having their own recess 20. Of course, if engine 10 is to be used with diesel fuel then spark plugs (and associated recesses) may not be necessary. Preferably, a diesel compression ignition version is very likely to use an even more compact combustion chamber bowl in the piston crown. The various stages of operation of one embodiment of the engine 10 are shown in figures 3-6.

In use, fluid is drawn into the inlet duct 3 by a suction caused by the downward movement of the piston 5 within the cylinder 12 and negative pressure caused by the fast-flowing exhaust fluids moving through the exhaust duct 4 and exhaust tube 8. The fluid is caused to move into the cylinder 12 because the downward orientation of the inlet duct 3 flows the inlet gas/fluid with a downward direction and momentum, drawn by the negative pressure created by both the movement of the piston 5 downwards and the fast-moving column of exhaust gas acting in an opposite upwards direction. This combination of negative pressure forces creates a strong sucking effect in the space being vacated by the movement of the piston within the cylinder 12 allowing the engine 10 to efficiently fill with inlet fluid. This flow of fluid is guided by separating wall 23 that helps guide inlet fluid into the cylinder 12 and prevents it being drawn into the exhaust duct 4 when efficient cylinder filling is required. At this stage of operation, the poppet valve 2 is in the open position (as shown in Figures 2 and 6) which allows the fluid to be drawn into the cylinder 12. As fluid is being drawn into the cylinder 12, fuel can be injected into the moving air stream or inducted through a carburettor. It is preferred to inject fuel directly into the combustion chamber 6; however, this is not a requirement of the system described herein.

Before the compression stroke begins, the poppet valve 2 closes and the commencement of upward movement of piston 5 compresses the gas and fuel mixture in the cylinder 12.

In the embodiments of the invention as shown in figures 2 to 15, as the piston 5 reaches top dead centre (shown in figures 3 and 4) a pronounced effect known as "squish" is created between the outer rim 22 of the head of the piston 5 and the corresponding rim of the top of the cylinder head wall. "Squish" is a well-known and desirable phenomenon which helps to promote efficient combustion, although use of the squish phenomenon is not critical for this invention. It has the effect in this engine of squeezing the outer, fuel mixture into the combustion chamber 6 in a state of extreme agitation. The layouts shown allows for a much greater squish area than in conventional engines because of the lack of conflict between piston and valve movement. In the axial induction embodiment above conservation of angular momentum means that the speed of the mixture will be dramatically increased at top dead centre when it is compressed into the combustion chamber 6. The squish area is largest with the combustion chamber 6 as a bowl in the piston because of the angled piston top. In this embodiment of the invention, the outer rim of piston 5 is angled between 0-35° from horizontal downwardly from the top of the piston.

Referring now to Figure 7, ignition of the compressed fuel and air mixture can take place in a recess 20 at the outer edge of the combustion chamber 6. When the recess 20 takes the shape of a lobe it is profiled to collect an eddy of rich mixture, which, when ignited, provides a good initiation to the flame front. Propagation of the flame will be fast and efficient owing to the extreme agitation and movement of the mixture allied to the compact nature of the combustion chamber 6, and the ability of the engine to work with a high compression ratio with reduced risk of detonation. This latter factor is aided by the lower working temperature of the single poppet valve 2 when compared to conventional separate inlet and exhaust valves.

The main advantage of the engine working with a stratified charge as described above is its ability to run with lean mixtures (lean burn). This allows for efficient part load running with the engine able to work with excess air, but with the correct fuel/air mixture at the point of ignition. It is expected that the engine could be developed to run with a throttle or in a throttle less state, with power controlled solely by the quantity of fuel injected, particularly when direct injection is used, along with variable valve timing.

The arrangements of the engine 10 described herein allow a large valve area and high lift of the poppet valve 2 without interference from the piston 5. This lack of interference allows for a very efficient inlet and exhaust cycle.

After combustion (see Figure 4) the piston 5 moves downwards in its power stroke. Prior to the piston 5 reaching bottom dead centre, the poppet valve 2 begins to open, this can be later than in a conventional engine, which will have more resistance to escape of exhaust fluid. This also allows the combustion chamber 6 of the engine 10 to be 100% scavenged. The longer power stroke should further aid efficiency. As the valve 2 opens there will be a pressure transfer to the inlet duct 3 and exhaust duct 4. This pressure will close valve 1 on the inlet duct 3. As the fluids pass the poppet valve 2 into the chamber 7 the fluid will follow its natural path (into the exhaust duct 4, where it will move into an exhaust system 8 (Fig 8) creating a column of fast moving fluid. At some stage in the exhaust cycle some air may also be drawn into the exhaust duct 4 by the momentum of the exhaust fluid. As piston 5 approaches top dead centre (TDC) the column of fluid should have fully scavenged the cylinder, and the poppet valve 2 will be fully inside combustion chamber 6. This enables complete scavenging of the engine, as there is no space for any residual exhaust fluid. The engine will also then have maximum valve lift at the end of the exhaust stroke and beginning of the induction stroke. This promotes good exhaust flow, and the connection between the inlet duct 3 and exhaust duct 4 promotes early acceleration of the inlet charge, because of the momentum of the exhaust fluid in the exhaust duct 4.

The momentum of the fluid passing through the exhaust duct 4 will begin to create a negative pressure in the chamber 7, thereby causing the inlet reed valve 1 to open and draw through air for the next inlet stroke. By the time the piston 5 has reversed direction to commence the inlet stroke, there will already be a momentum of inlet fluid following the natural path into the chamber 7, and the exhaust fluid flow may cause a column of inlet fluid to be drawn behind it up exhaust duct 4 when the piston is around Top Dead Centre prior to the piston 5 beginning its downward suction stroke. This flow of fluid is additional to that caused by the downward movement of the piston 5 described at the start of the cycle described above.

Figure 8 illustrates the effect of pressure waves within the exhaust duct 4 when the exhaust length, and/or shape and/or diameter is tuned to the operating speed of the engine. As the valve 2 begins to close at the end of the induction stroke, a positive pressure wave can be reflected from the open end of exhaust tube 8 or by pressure reflection chambers, resonance chambers and devices of the sort more typically used in 2 stroke motorcycles as understood in the art., (not shown) This reflection of negative and/or positive pressure waves can result in inlet gas or fluid that may have been drawn up the exhaust duct 4 being reflected back down the exhaust duct and forced back into cylinder 12 (see arrow 50), thereby providing improved cylinder filling for a particular inlet charge. Use of the pressure waves in the exhaust duct 4 means that the exhaust duct 4 may not need to be provided with any physical valves or other restricting devices, and the exhaust duct 4 can be tuned to harness the exhaust pressure waves to assist inlet filling and exhaust scavenging.

Preferably, the dynamic energy in the flow of exhaust fluid in the exhaust duct 4 is harnessed by the engine 1, to accelerate the inlet air or fluid when the piston 5 is near the top of its stroke, and this acceleration of the exhaust fluid helps create a negative pressure in the cylinder 12, which aids filling of the cylinder 12 with inlet air or fluid through all or part of the induction stroke of the engine 1.

The exhaust duct 4 may also be tuned to harness dynamic (kinetic) energy in the exhaust fluid dynamics and to use pressure waves in the exhaust fluid. This can affect the dynamics and flow of the inlet gas or fluid. Harnessing dynamic energy in the exhaust fluid, and the use of pressure waves in the exhaust fluid can assist scavenging of the cylinder 12 with reflected negative pressure waves from the exhaust. Harnessing this energy can also assist in the subsequent filling of the cylinder 12, (after the previous scavenging) using reflected positive pressure waves from the exhaust fluid. The negative pressure enhanced cylinder scavenging and positive pressure enhanced cylinder filing may be independent events, or may be linked.

The cycle of inlet stroke, compression stroke, power stroke and exhaust stroke can be repeated in the same manner described above.

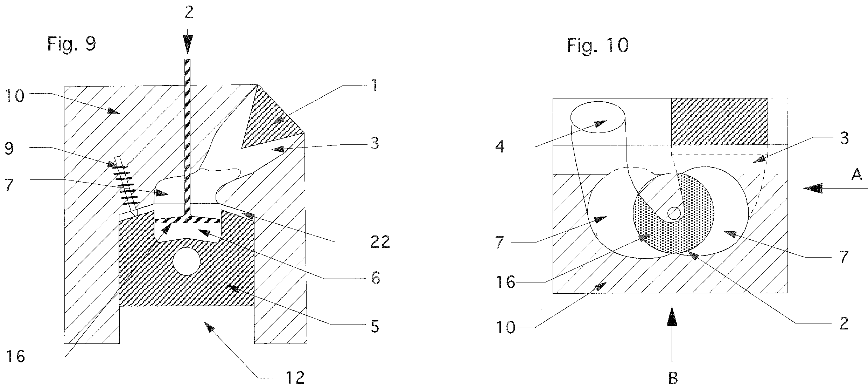

In the alternative embodiment of the engine as shown in figures 9 &10 as the piston 5 moves up the cylinder 12 the speed of the vortex induced by the axial induction of the fluid will tend to increase within the cylinder 12. Centrifugal forces on the mixture will tend to urge denser fuel particles towards the edge of the cylinder 12. This has the effect of stratifying the charge with the more dense, or richer, mixture of liquid fuel and air being forced toward the outside of the cylinder 12, where the spark plugs 9 are located.

Figures 9 and 10 show an alternative arrangement of inlet and exhaust ducts. In this embodiment the ducts 3 and 4 enter the chamber 7 tangentially creating a swirl around the axis of the centre line of the cylinder. Otherwise, the engine functions in the same manner as described above.

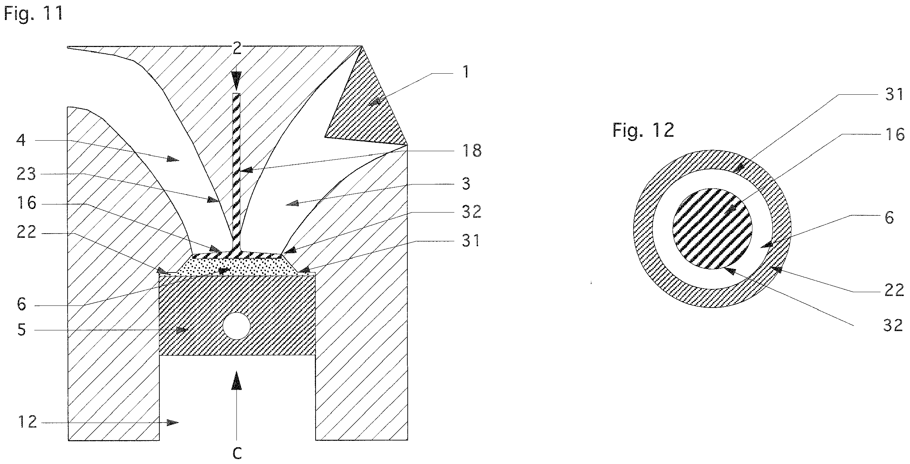

Figures 11 and 12 show different views of an engine 10, with a circular combustion chamber 6. In this alternative embodiment of the invention, a combustion chamber 6 is formed between a recess in the cylinder head 12 and a flat or slightly recessed top surface of piston 5. Looking upwards (in direction of arrow C) from the top of piston 5 (figure 12) the shape of combustion chamber 6 may be circular, and of a greater diameter than the poppet
valve 2 and of an equal or lesser diameter than the cylinder 12. Looking from a side view (figure 11) the walls of the combustion chamber 6 may slope or curve from the greater diameter 31, at the base of the combustion chamber 6 to the lesser diameter 32 of the valve seat. When combustion chamber 6 is formed with a lesser diameter 32 than the cylinder 12 a ring-shaped squish area 22 may be formed between the piston top and this smaller diameter of the combustion chamber recess.

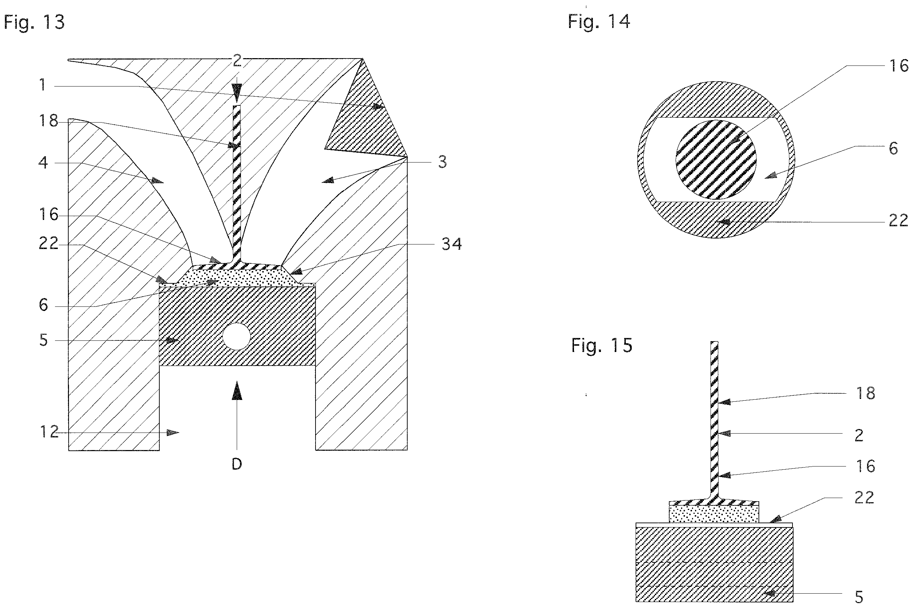

Figures 13, 14 and 15 show different views of a further embodiment of engine 10, with a substantially oval combustion chamber 6. In this embodiment of the invention, combustion chamber 6 is formed between a recess in the cylinder head and a flat or slightly recessed top surface of piston 5. Looking upwards (in the direction of arrow D) from the piston top (figure 14), the recess in the cylinder head may be approximately oval or oblong in shape. The length of the oval or oblong profile may be the same or slightly less than the diameter of the cylinder bore. The width of the oval or oblong may be the same or slightly greater than the diameter of the head 16 of the poppet valve 2. The longer walls of the chamber 6 may be vertical and the narrower walls 34may incline upwards at an angle to meet the poppet valve seat 16. This shape of the combustion chamber allows for a squish area 22 between the top of the piston 5 and the cylinder head adjacent to the narrow sides of the combustion chamber 6.

The embodiments described herein have significant advantages over the prior art in, at least, the following respects.

The engine 10 is compatible with 4 stroke petrol or diesel engines, where it can overcome some of the breathing problems caused by valve/piston clearance restrictions resulting from a high compression ratio. It is particularly suited to burn gaseous fuels such as propane, methane and hydrogen since it can combine good volumetric efficiency with a high compression ratio. In addition, aspects of this invention could be adapted for other engines that do not operate on a four-stroke cycle, such as a two-stroke, or a six-stroke engine.

This engine layout allows for long periods of high valve lift combined with a large valve area which allows good volumetric efficiency (i.e. breathing).

The effect of full valve opening at top dead centre enables the early flow of inlet fluid drawn into the engine by negative pressure generated by exhaust flow. This creates inlet fluid momentum before the piston begins its pumping stroke aiding cylinder filling improving volumetric efficiency and reducing pumping losses.

The compact combustion chamber 6 aided by pronounced squish and tumble or spiral movement of fluids allows a fast, clean and complete burn.

The column of air drawn into the exhaust duct 4 allows for resonant wave tuning to the resonant frequency of the exhaust duct (as used in 2 stoke motorcycle engines) to improve flow characteristics and volumetric efficiency. Also on multi-cylinder versions of the engine, an effective degree of self-super charging can be achieved by connecting exhaust ducts and using the exhaust pressure of one cycle to force residual air in a neighbouring exhaust port back into the cylinder as the valve closes, as is known in the art.

The cool inlet fluids flowing over the poppet valve 2 will reduce the valve temperature, thereby increasing the engine's detonation threshold. This feature allows the engine to work safely at higher compression ratios, or with poorer fuel quality. The above design permits a free breathing, long stroke engine combining good power and torque. Traditional long stroke engines are limited by their inability to breathe efficiently at high revs because of limited valve area.

The arrangement described above is simple to build and has fewer moving parts than a conventional engine, and should be adaptable to any existing crank case/cylinder block. It also leaves scope for further, more complicated designs with different types of manifold inlet and exhaust duct valving.

In the preferred architecture of the engine as shown in all of the accompanying illustrations the position of the poppet valve on the same vertical centreline as the cylinder bore allows the engine to be manufactured easily using a single component combining the cylinder block and cylinder head, this is commonly referred to in the art as a monobloc construction, and the engine may be machine finished in production using a single drilling and boring process for the poppet valve aperture and cylinder.

Friction in the valve train will be reduced owing to lesser acceleration and deceleration forces inherent to this design and because the engine has fewer moving components, thus improving mechanical efficiency and enhancing durability.

The engine described above is concerned primarily with the design of an engine for economy and emission benefits. However, the efficiency, and therefore high specific power output may give the engine benefits for sports and racing engines.

## Claims

1. An internal combustion engine (10) comprising at least one cylinder, each cylinder comprising:
a piston (5);
a cylinder head comprising an inlet duct (3) incorporating an inlet valve (1) to allow flow through said inlet duct (3) in only one direction; and an exhaust duct (4);
a single chamber valve (2) through which both inlet and exhaust fluids pass from their respective ducts (3,4) into and out of the cylinder (12); and
a combustion chamber (6) in the cylinder (12) that allows the chamber valve (2) to be significantly open when the piston (5) is at top dead centre enabling a transfer of fluid, fluid flow pressure and pressure waves between the cylinder (12), and the inlet (3) and exhaust (4) ducts; **characterised by**:
a chamber (7) being a hollow interior volume that extends from the chamber valve (2) seat in a direction away from the combustion chamber (6), the chamber (7) permanently connecting the inlet (3) and exhaust (4) ducts when the chamber valve (2) is seated in the chamber valve seat and when the chamber valve (2) is unseated in the chamber valve seat; and by
the exhaust duct (4) being tuned, in operation, to:
accelerate the inlet fluid when the piston (5) is near the top of its stroke;
create negative pressure in the cylinder (12) to aid cylinder filling with inlet fluid through at least part of the induction stroke by harnessing the momentum of the exhaust fluid in the exhaust duct (4); and
produce reflected positive pressure waves in the exhaust fluid to force fluid drawn from the inlet duct (3) into the exhaust duct (4) back into the cylinder (12).

2. An internal combustion engine (10) according to claim 1, wherein the exhaust duct (4) is tuned by adjusting the length and/or shape and/or diameter of the exhaust duct (4).

3. An internal combustion engine (10) as claimed in claim 1 or claim 2, further comprising a wall separating the inlet (3) and exhaust ducts (4), said wall (23) guiding fluid into the cylinder (12) in a first direction (23) and guiding fluid out of the cylinder (12) in a second direction, where said first and second directions are different directions.

4. An internal combustion engine (10) as claimed in any preceding claim wherein the combustion chamber (12) is shaped to allows the chamber valve (2) to be significantly open when the piston (5) is at top dead centre placing substantially all of the remaining cylinder (12) and combustion chamber (6) space above the lower surface of the valve (12) head

5. An internal combustion engine (10) according to any preceding claim wherein, one or both of the inlet (5) and exhaust duct (4) enter the cylinder (12) at an angle to a longitudinal axis of a side wall of the cylinder (12).

6. An internal combustion engine (10) as claimed in any of preceding claim, wherein the inlet (3) and/or exhaust (4) ducts enter a subsidiary chamber of the cylinder (12) when the chamber valve (2) is open.

7. An internal combustion engine(10) as claimed in claim 6, wherein the chamber valve has a valve seat which forms a boundary between the subsidiary chamber and the main chamber.

8. An internal combustion engine as claimed in any preceding claim that has a compact circular part conical combustion chamber in the cylinder head with a ring-shaped squish area (22).

9. An internal combustion engine (10) as claimed in any preceding claim, wherein the combustion chamber (12) is substantially a cylindrical depression in the piston (5) with a ring-shaped squish area (22) that may have an inclination of between zero and thirty degrees.

10. An internal combustion engine (10) as claimed in claim 9, wherein the depression further comprises at least one outwardly extending lobe, in which the lobe, in use, causes an eddy to form in fluid flowing around the depression.

11. An internal combustion engine (10) according to any preceding claim that is manufactured using a single component combining the cylinder block and cylinder head.

## Patentansprüche

1. Verbrennungsmotor (10) mit mindestens einem Zylinder, wobei jeder Zylinder einschließend:
einem Kolben (5);
einen Zylinderkopf mit einem Einlasskanal (3), der ein Einlassventil (1) enthält, um einen Durchfluss durch den Einlasskanal (3) in nur einer Richtung zu ermöglichen; und einem Abluftkanal (4);
ein Einkammerventil (2), durch das sowohl Einlass- als auch Auslassflüssigkeiten aus ihren jeweiligen Kanälen (3, 4) in den Zylinder (12) und aus ihm heraus gelangen; und
eine Brennkammer (6) im Zylinder (12), die es ermöglicht, dass das Kammerventil (2) deutlich geöffnet ist, wenn sich der Kolben (5) im oberen Totpunkt befindet, wodurch eine Übertragung von Fluid, Fluidströmungsdruck und Druckwellen zwischen dem Zylinder (12) und den Einlass- (3) und Auslasskanälen (4) ermöglicht wird;
**gekennzeichnet durch**:
eine Kammer (7) ein hohles Innenvolumen ist, das sich von dem Sitz des Kammerventils (2) in einer von der Brennkammer (6) weggerichteten Richtung erstreckt, wobei die Kammer (7) die Einlass- (3) und Auslasskanäle (4) dauerhaft verbindet, wenn das Kammerventil (2) in dem Sitz des Kammerventils sitzt und wenn das Kammerventil (2) in dem Sitz des Kammerventils gelöst ist; und durch
Der Abluftkanal (4) ist im Betrieb so eingestellt, dass
die Einlassflüssigkeit beschleunigen, wenn sich der Kolben (5) in der Nähe des Scheitelpunkts seines Hubs befindet;
Erzeugen eines Unterdrucks im Zylinder (12), um die Befüllung des Zylinders mit Einlassflüssigkeit während mindestens eines Teils des Ansaugtakts zu unterstützen, indem der Impuls der Abgasflüssigkeit im Auslasskanal (4) genutzt wird; und
reflektierte positive Druckwellen in der Abgasflüssigkeit erzeugen, um die aus dem Einlasskanal (3) in den Auslasskanal (4) gezogene Flüssigkeit zurück in den Zylinder (12) zu drücken.

2. Verbrennungsmotor (10) nach Anspruch 1, wobei der Auspuffkanal (4) durch Einstellen der Länge und/oder Form und/oder des Durchmessers des Auspuffkanals (4) abgestimmt ist.

3. Verbrennungsmotor (10) nach Anspruch 1 oder 2, ferner mit einer Wand, die den Einlass (3) und die Auslasskanäle (4) trennt, wobei die Wand (23) das Fluid in den Zylinder (12) in einer ersten Richtung (23) und das Fluid aus dem Zylinder (12) in einer zweiten Richtung leitet, wobei die erste und die zweite Richtung unterschiedliche Richtungen sind.

4. Verbrennungsmotor (10) nach einem der vorhergehenden Ansprüche, wobei die Brennkammer (12) so geformt ist, dass das Kammerventil (2) deutlich geöffnet sein kann, wenn sich der Kolben (5) im oberen Totpunkt befindet, wodurch im Wesentlichen der gesamte verbleibende Zylinder (12) und der Brennraum (6) über der unteren Oberfläche des Ventilkopfes (12) angeordnet sind.

5. Verbrennungsmotor (10) nach einem der vorhergehenden Ansprüche, wobei einer oder beide der Einlass- (5) und Auslasskanäle (4) in einem Winkel zu einer Längsachse einer Seitenwand des Zylinders (12) in den Zylinder (12) eintreten.

6. Verbrennungsmotor (10) nach einem der vorhergehenden Ansprüche, wobei die Einlass- und/oder Auslasskanäle (4) in eine Nebenkammer des Zylinders (12) eintreten, wenn das Kammerventil (2) geöffnet ist.

7. Verbrennungsmotor(10) nach Anspruch 6, wobei das Kammerventil einen Ventilsitz aufweist, der eine Grenze zwischen der Nebenkammer und der Hauptkammer bildet.

8. Brennkraftmaschine nach einem der vorhergehenden Ansprüche, die im Zylinderkopf einen kompakten, kreisförmigen konischen Brennraum mit einer ringförmigen Quetschfläche (22) aufweist.

9. Verbrennungsmotor (10) nach einem der vorhergehenden Ansprüche, wobei die Brennkammer (12) im Wesentlichen eine zylindrische Vertiefung im Kolben (5) mit einer ringförmigen Quetschfläche (22) ist, die eine Neigung zwischen null und dreißig Grad aufweisen kann.

10. Verbrennungsmotor (10) nach Anspruch 9, wobei der Unterdruck ferner mindestens einen sich nach außen erstreckenden Kolben umfasst, bei dem sich der Kolben im Gebrauch einen Wirbel in einem um den Drücker strömenden Fluid bildet.

11. Verbrennungsmotor (10) nach einem der vorhergehenden Ansprüche, der unter Verwendung eines einzigen Bauteils hergestellt ist, das den Zylinderblock und den Zylinderkopf kombiniert.

## Revendications

1. Moteur à combustion interne (10) comprenant au moins un cylindre, chaque cylindre Comprenant:
un piston (5) ;
une culasse comprenant un conduit d'admission (3) incorporant une soupape d'admission (1) pour permettre l'écoulement à travers ledit conduit d'admission (3) dans une seule direction ; et un conduit d'évacuation (4) ;
une vanne à chambre unique (2) par laquelle les fluides d'admission et d'échappement passent de leurs conduits respectifs (3,4) dans et hors de la bouteille (12) ; et
une chambre de combustion (6) dans le cylindre (12) qui permet à la vanne de la chambre (2) d'être sensiblement ouverte lorsque le piston (5) est au point mort supérieur, ce qui permet un transfert de fluide, de pression d'écoulement de fluide et d'ondes de pression entre le cylindre (12) et les conduits d'admission (3) et d'échappement (4) ;
**Caractérisé par** :
une chambre (7) étant un volume intérieur creux qui s'étend du siège de la vanne de chambre (2) dans une direction opposée à la chambre de combustion (6), de la chambre (7) reliant en permanence les conduits d'entrée (3) et d'échappement (4) lorsque la soupape de chambre (2) est insérée dans le siège de la vanne de chambre et lorsque la vanne de chambre (2) est déplacée dans le siège de la vanne de chambre ; et par
le conduit d'évacuation (4) étant réglé, en fonctionnement, sur :
accélérer le fluide d'admission lorsque le piston (5) est proche du sommet de sa course ;
créer une pression négative dans le cylindre (12) pour faciliter le remplissage du cylindre avec du liquide d'admission pendant au moins une partie de la course d'admission en exploitant la quantité de mouvement du fluide d'échappement dans le conduit d'échappement (4) ; et
produire des ondes de pression positive réfléchies dans le fluide d'échappement pour forcer le fluide aspiré du conduit d'admission (3) dans le conduit d'échappement (4) à revenir dans le cylindre (12).

2. Moteur à combustion interne (10) selon la revendication 1, dans lequel le conduit d'échappement (4) est réglé en ajustant la longueur et/ou la forme et/ou le diamètre du conduit d'échappement (4).

3. Moteur à combustion interne (10) selon la revendication 1 ou la revendication 2, comprenant en outre une paroi séparant les conduits d'admission (3) et d'échappement (4), ladite paroi (23) guidant le fluide dans le cylindre (12) dans une première direction (23) et le fluide de guidage sortant du cylindre (12) dans une deuxième direction, où lesdites première et deuxième directions sont des directions différentes.

4. Moteur à combustion interne (10), tel que revendiqué dans toute revendication antérieure, dans lequel la chambre de combustion (12) est conçue de manière à permettre à la soupape de la chambre (2) d'être sensiblement ouverte lorsque le piston (5) est au point mort supérieur, plaçant la quasi-totalité de l'espace restant du cylindre (12) et de la chambre de combustion (6) au-dessus de la surface inférieure de la culasse de soupape (12).

5. Moteur à combustion interne (10) selon toute revendication antérieure dans lequel, l'un ou l'autre ou les deux conduits d'admission (5) et d'échappement (4) pénètrent dans le cylindre (12) à un angle longitudinal d'une paroi latérale du cylindre (12).

6. Un moteur à combustion interne (10) tel que revendiqué dans l'une des revendications précédentes, dans lequel les conduits d'admission (3) et/ou d'échappement (4) pénètrent dans une chambre auxiliaire du cylindre (12) lorsque la soupape de la chambre (2) est ouverte.

7. Moteur à combustion interne(10) selon la revendication 6, dans lequel la soupape de la chambre a un siège de soupape qui forme une limite entre la chambre auxiliaire et la chambre principale.

8. Moteur à combustion interne, tel que revendiqué dans toute revendication antérieure, doté d'une chambre de combustion conique à partie circulaire compacte dans la culasse avec une zone d'écrasement en forme d'anneau (22).

9. Moteur à combustion interne (10) tel que revendiqué dans toute revendication antérieure, dans lequel la chambre de combustion (12) est essentiellement une dépression cylindrique dans le piston (5) avec une zone d'écrasement en forme d'anneau (22) qui peut avoir une inclinaison comprise entre zéro et trente degrés.

10. Moteur à combustion interne (10) selon la revendication 9, dans lequel la dépression comprend en outre au moins un lobe s'étendant vers l'extérieur, dans lequel le lobe, en cours d'utilisation, provoque la formation d'un tourbillon dans le fluide s'écoulant autour de la dépression.

11. Moteur à combustion interne (10) selon toute revendication antérieure qui est fabriqué à l'aide d'un seul composant combinant le bloc-cylindres et la culasse.
